# EUROPEAN PATENT SPECIFICATION

(11) **EP 4 672 177 B1**
(45) Date of publication and mention of the grant of the patent: **11.11.2026**
(21) Application number: 24925125.7
(22) Date of filing: 14.09.2024
(51) Int. Cl.: G06V 20/50, G06V 10/25, G06V 20/52, G06V 20/64

(54) **RGB-D IMAGE-BASED METHOD FOR DETECTING STATE OF PARCELS ON CROSS-BELT TROLLEY**
RGB-D-BILDBASIERTES VERFAHREN ZUR ERKENNUNG DES ZUSTANDES VON PAKETEN AUF QUERGURTWAGEN
PROCÉDÉ BASÉ SUR UNE IMAGE RVB-D POUR DÉTECTER L'ÉTAT DE COLIS SUR UN CHARIOT DE BANDE CROISÉE

(30) Priority: 11.05.2024 CN 202410579502
(43) Date of publication of application: 31.12.2025
(73) Proprietor: Wayzim Technology Co., Ltd., Wuxi, Jiangsu 214000 (CN)
(72) Inventor: DU, Ping, Wuxi, Jiangsu 214000 (CN); ZHANG, Kaizhong, Wuxi, Jiangsu 214000 (CN); TANG, Jinya, Wuxi, Jiangsu 214000 (CN)
(74) Representative: HGF
(86) International application number: PCT/CN2024/119193
(87) International publication number: WO 2025/236505

(56) References cited:
- CN-A- 111 597 857
- CN-A- 112 756 265
- CN-A- 114 529 863
- CN-A- 116 255 912
- CN-A- 117 830 389
- CN-A- 117 830 389
- CN-A- 118 172 716
- CN-B- 111 597 857
- CN-B- 116 167 991
- US-A1- 2023 396 746

## Description

### TECHNICAL FIELD

The present invention belongs to the field of image processing, and in particular to a method for detecting a parcel status of a cross-belt trolley based on an RGB-D image.

### BACKGROUND

With the rapid developments of the express logistics industry, the number of parcel sorting explodes, while the traditional manual method for supplying and sorting parcels is inefficient and can no longer satisfy current requirements.

In order to improve the efficiency of parcel sorting, a fully automatic parcel supply system is used by the logistics industry currently to implement automated parcel supply and sorting. The cross-belt trolley system is the last link in the fully automatic parcel supply system, and during this link, identifying the status of the parcel on the cross-belt trolley is required. When the parcel on the cross-belt trolley is in a normal single-piece status, the normal sorting processing is performed. When the parcel on the cross-belt trolley is in an abnormal status, the abnormal reflux processing is performed. However, since the background of using the cross-belt trolley is generally relatively complicated, and the types, the textures, the shapes and the sizes of the parcels on the cross-belt trolleys are different, these factors bring considerable challenges to the status identification of the parcels on the cross-belt trolley, affecting the accuracy and efficiency of the cross-belt trolley sorting. The following documents disclose examples of conveyor belt parcel sorting systems using computer vision: CN 111 597 857 B (KUNSHAN BRANCH INST MICROELECTRONICS CAS) 26 September 2023, CN 117 830 389 A (ZHONGKE WEIZHI TECH CO LTD) 5 April 2024, CN 114 529 863 A (SHANGHAI EONGPU INFORMATION TECH LIMITED COMPANY) 24 May 2022 and CN 116 167 991 B (ZHONGKE WEIZHI TECH CO LTD) 8 September 2023.

### SUMMARY

In view of the above problems and technical requirements, a method for detecting a parcel status of a cross-belt trolley based on an RGB-D image is provided in the the present invention. The technical solution of the present invention is as follows.

Provided is a method for detecting a parcel status of a cross-belt trolley based on an RGB-D image, and the method for detecting the parcel status of the cross-belt trolley includes in the following.

An RGB image and a depth image of a target region are collected by an RGB-D camera, and the target region at least includes a belt region and an accordion plate region of the cross-belt trolley.

A target detection is performed on parcels in the collected RGB image of the target region by utilizing a target detection model, and a plurality of detection frames are extracted in the RGB image.

Parcel foreground pixels in the each detection frame are extracted and obtained according to depth values for pixels located in each detection frame in the depth image, and an initial mask image is formed.

The initial mask image in the each detection frame is converted into three-dimensional point cloud data, and a parcel mask region in the RGB image is obtained according to projection data of the three-dimensional point cloud data on a belt reference plane of the cross-belt trolley.

According to the relative position relation between the parcel mask region and the belt region of the cross belt trolley, as well as the relative position relation between the parcel mask region and the accordion plate region of the cross belt trolley, the parcel on the cross-belt trolley is determined to be in a normal single-piece status or an abnormal status.

Further, a technical solution is that the step of determining that the parcel on the cross-belt trolley is in a normal single-piece status or an abnormal status includes in the following.

In a case where merely a parcel mask region is determined to be extracted, the placement posture of the parcel corresponding to the parcel mask region is detected according to the relative position relation between the parcel mask region and the belt region of the cross belt trolley as well as the relative position relation between the parcel mask region and the accordion plate region of the cross belt trolley.

In a case where the placement posture of the parcel corresponding to the parcel mask region is normal, the parcel on the cross-belt trolley is determined to be in a normal single-piece status, otherwise, the parcel on the cross-belt trolley determined to be in an abnormal status.

Further, a technical solution is that the step of detecting the placement posture of the parcel corresponding to the parcel mask region according to the relative position relation between the parcel mask region and the belt region of the cross belt trolley, as well as the relative position relation between the parcel mask region and the accordion plate region of the cross belt trolley include in the following.

The cross-overlap area ***S*₁** of the parcel mask region and the belt region is determined according to the relative position relation between the parcel mask region and the belt region, and the cross-overlap area ***S*₂** of the parcel mask region and the accordion plate region is determined according to the relative position relation between the parcel mask region and the accordion plate region.

According to the cross-overlap area ***S*₁** of the parcel mask region and the belt region, and the cross-overlap area ***S*₂** of the parcel mask region and the accordion plate region, the placement posture of the parcel corresponding to the parcel mask region is detected.

Further, a technical solution is that the step of detecting the placement posture of the parcel corresponding to the parcel mask regions according to the cross-overlap area ***S*₁** and the cross-overlap area ***S*₂** includes in the following.

In a case where $\frac{{S}_{1}}{S} > η$ and $\frac{{S}_{2}}{S} ⩽ γ$, the placement posture of the parcel corresponding to the parcel mask region is determined to be normal, otherwise, the placement posture of the parcel corresponding to the parcel mask region is determined to be abnormal, where ***S*** denotes an area of the parcel mask region, and ***η*** and **γ** denotes two proportional coefficients, respectively.

Further, a technical solution is that the method for detecting the parcel status of the cross-belt trolley further includes in the following.

In a case where merely one parcel mask region is extracted and the placement posture of the parcel corresponding to the parcel mask region is abnormal, the parcel on the cross-belt trolley is determined to be in an over-edge abnormal status.

In a case where a plurality of parcel mask regions are extracted, the parcel on the cross-belt trolley is determined to be in a multi-piece abnormal status.

Further, a technical solution is that a step of extracting the parcel mask region in the RGB image includes in the following.

The coordinate transformation is performed according to camera parameters for the RGB-D camera as well as an image coordinate and the depth values for each pixel in the initial mask image, and the three-dimensional point cloud data are obtained.

Projection data are obtained by projecting the three-dimensional point cloud data onto the belt reference plane of the cross-belt trolley.

The coordinate transformation is performed on the projection data according to the camera parameters for the RGB-D camera, and a target image coordinate is obtained, and pixel points located at the target image coordinate in the RGB image are extracted, and the parcel mask region is formed.

Further, a technical solution is that the step of obtaining the projection data by projecting the three-dimensional point cloud data onto the belt reference plane of the cross-belt trolley includes in the following.

The three-dimensional point cloud data are projected onto the belt reference plane of the cross-belt trolley by utilizing a point-to-plane projection calculation formula according to a plane equation of the belt reference plane of the cross-belt trolley, and the projection data are obtained.

Further, a technical solution is that the step of extracting the parcel foreground pixels in the each detection frame according to depth values for the pixels located in the each detection frame in the depth image and forming an initial mask image includes in the following.

Depth differences between the depth values for the each pixel in the detection frame and a reference depth value are calculated, and the reference depth value is a depth value for the belt reference plane of the cross-belt trolley.

Pixels whose depth difference between the depth values and the reference depth value reaches a depth difference threshold are extracted as foreground pixels, and the initial mask image within the detection frame is formed.

Further, a technical solution is that the method for detecting the parcel status of the cross-belt trolley further includes in the following.

In a case where the belt region of the cross-belt trolley is in an empty status, a calibrated RGB image and calibrated depth data of the target region are collected through the RGB-D camera.

The belt region of the cross-belt trolley is determined according to the calibrated RGB image.

The coordinate transformation is performed according to the camera parameters for the RGB-D camera, as well as the image coordinate and depth values for the each pixel in the belt region of the cross-belt trolley, and the three-dimensional point cloud data of the belt are obtained.

A point cloud plane fitting is performed on the belt three-dimensional point cloud data according to a random sampling consistency algorithm, and a plane equation of the belt reference plane is obtained, and an average depth value for the belt reference plane obtained by the fitting is taken the reference depth value.

Further, a technical solution is that the method for detecting the parcel status of the cross-belt trolley further includes in the following.

A PP-Picodet network is pre-trained by using a COCO public dataset, and pre-trained weights are obtained.

A sample RGB image of the target region is collected and the parcel in the sample RGB image are annotated, a data set expansion process is performed on the annotated sample RGB image, a sample data set is obtained, and the data set expansion process includes at least one of a rotation, a brightness transformation and a contrast transformation.

A network training is performed based on the pre-trained weights obtained by the network pre-training by utilizing the sample data set, the target detection model is obtained, and a SimOTA sampling strategy and a H-Swish activation function are used during the training.

The beneficial technical effects of the present invention are in the following.

The present invention discloses a method for detecting a parcel status of a cross-belt trolley based on an RGB-D image. In the method, a target detection model is utilized in combination with an aligned RGB image and a depth representation to preliminarily segment and obtain an initial mask image, then the initial mask image can be mapped to a belt reference plane through the coordinate transformation to obtain a parcel mask region on the belt reference plane, and then the parcel mask region on the belt reference plane can characterize the precise mask information of each parcel, thereby accurately determining the status of the parcel. In the method, a relatively accurate detection result can be obtained under the influences of a complex environment and illumination and deployment is easy, which is suitable for on-site use of an automatic parcel sorting system.

### BRIEF DESCRIPTION OF THE DRAWINGS

FIG. 1 illustrates a flow chart of a method for detecting a parcel status of a cross-belt trolley in an embodiment of the present invention.
FIG. 2 illustrates a flow chart of a method for determining a status of a parcel on a cross-belt trolley in an embodiment of the present invention.

### DETAILED DESCRIPTION OF THE EMBODIMENTS

The specific implementations of the present invention are further described below in conjunction with the accompanying drawings.

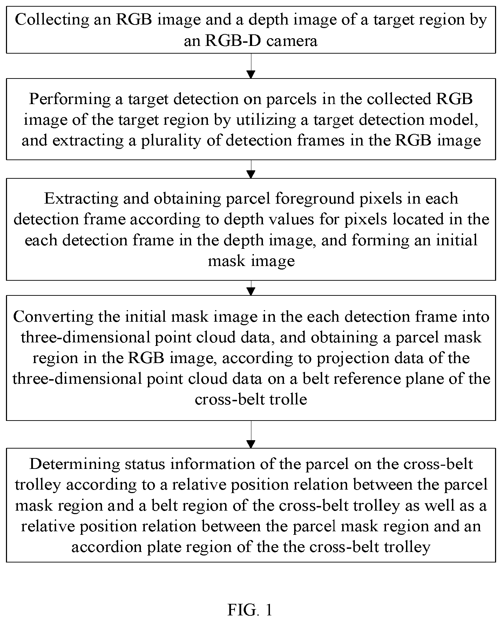

The present invention discloses a method for detecting a parcel status of a cross-belt trolley based on an RGB-D image. In reference with the flowchart as illustrated in FIG. 1, the method for detecting the parcel status of a cross-belt trolley includes in the following.

In Step 1, an RGB image and a depth image of a target region are collected by an RGB-D camera.

The RGB-D camera is generally installed at a preset height above the cross-belt trolley facing the surface of the cross-belt trolley. The view field of the RGB-D camera is the range of the target region, and the target region at least includes the belt region and the accordion plate region on the surface of the cross-belt trolley.

In order to satisfy the requirements of different scenarios, different angles of the view field can be implemented by matching the industrial lenses with different sizes to satisfy the range requirements of the target region. In addition, to ensure that there is no problem that high parcels block small parcels, the lens of the RGB-D camera generally require to be installed more than one meter away from the surface of the cross-belt trolley. The mode for triggering the RGB-D camera is the hardware single-frame triggering. When each cross-belt trolley is detected by the photoelectric detector installed at the predetermined position, the RGB-D camera is triggered to take a photo, and the frame rate of the photo is determined by the actual line speed of the cross-belt trolley, the frame rate processed by the detection algorithm can reach up to 20 frame/s, the resolution of the collected image is 1280*960, and the algorithm processing platform of the RGB-D camera is NVIDIA Jetson NANO.

The collected RGB image and depth image requires to be registered first, which can be completed by utilizing the existing registration algorithms, and this step will not be further elaborated and described herein. Commonly, parcels are placed on the surface of the cross-belt trolley, so that the target region contains parcels, and the obtained RGB image and the depth image also contain parcels, while the number and the position of parcels placed on the surface of the cross-belt trolley are not fixed, so that the number and the position of parcels in the RGB image and the depth image are not fixed likewise. However, in special situations where the surface of the cross belt trolley is empty without any parcels placed, the target region does not contain any parcels, and there are no parcels in the RGB image or depth image either.

In Step 2, a target detection is performed on parcels in the collected RGB image of the target region by utilizing a target detection model, and a plurality of detection frames are extracted in the RGB image.

The each extracted and obtained detection frame is in correspondence to a parcel on the surface of a cross-belt trolley, and the each detection frame is configured to identify the region where the parcel is located. In a case where the target detection model is actually used for target detection, a plurality of detection frames and the respective confidences are obtained, the detection frames whose confidence reaches the confidence threshold are retained, and then the non-maximum suppression method is further used to delete the detection frames whose intersection-over-union ratio is greater than the predetermined intersection-over-union ratio threshold to obtain the optimal detection frame corresponding to each parcel. Generally, the confidence threshold is set to 0.5 and the intersection-over-union ratio threshold is set to 0.7.

Since the target region commonly includes other background areas in addition to the belt region and accordion plate region on the surface of the cross-belt trolley, in one embodiment, after obtaining the RGB image and depth image of the target region, the region of interest in the RGB image and the depth image is first calibrated, and the region of interest is the region where the belt region and accordion plate region on the surface of the cross-belt trolley are located. Then, the target detection model is utilized to perform target detection on the RGB image in the region of interest, thereby reducing the amount of calculation.

The target detection model used in this step is pre-trained, thereby before using the target detection model, a method for training the target detection model is further included, and the method includes in the following.
(1) A sample RGB image of the target region is collected and the parcel in the sample RGB image is annotated, in a case where the image is annotated, the labelme annotation tool is used to annotate the minimum circumscribed rectangle of the parcel. Similarly, after obtaining the sample RGB image, firstly the sample RGB image is cropped to retain merely the interest area of the image, and then the image is annotated.
(2) The data set expansion processing is performed on the sample RGB images that have completed image annotation to obtain a sample data set. The data set expansion processing used includes at least one of the rotation, the brightness transformation, and the contrast transformation.
(3) The random initialization method is used to determine the initial weight of PP-Picodet, and then COCO public dataset is used to pre-train the PP-Picodet network to obtain the pre-trained weight. In one embodiment, the number of iterations of network pre-training is 160,000, and the weight of the optimal MAP obtained by training is recorded.
   The PP-Picodet used in this embodiment is a lightweight network based on the PaddlePaddle framework, the backbone network thereof adopts MobileNetV3 and the head network thereof uses the PicoHeadV2 structure.
(4) Then, the network is trained based on the pre-trained weights obtained by network pre-training by utilizing the sample data set to obtain the final target detection model. In this process, the pre-trained weights obtained by network pre-training are taken as the initial weights of PP-Picodet, and then iterative training is performed by utilizing the sample data set, and the SimOTA sampling strategy is used during the training, and the label allocation method is dynamically changed during the training process. In addition, the H-Swish activation function is used instead of the general Relu activation function. The training step length of the network training process in this step is 300 epochs, and the optimal F1-score weight is taken as the model weight of the final target detection model.

In Step 3, according to the depth values of the pixels in each detection frame in the depth image, the enclosed foreground pixels in each detection frame are extracted and obtained to form an initial mask image.

The detection frame extracted in Step 2 is the minimum circumscribed rectangle of the parcel. Due to the different shapes of parcels, the detection frame generally includes other backgrounds in addition to the parcel. Since the parcel is placed on the surface of the cross-belt trolley, the belt reference plane of the cross-belt trolley can be utilized to filter out pixels in other background areas and extract the foreground pixels of the parcel. In one embodiment, the depth differences between the depth value for the each pixel in the detection frame and the reference depth value are first calculated, and then the pixels whose depth difference between the depth value and the reference depth value reaches the depth difference threshold are extracted as the foreground pixels of the parcel to form the initial mask image in the detection frame. The depth difference threshold can be set according to a custom value based on experience, or the height of the thinnest parcel that requires to be detected on site.

The reference depth value used herein is the depth value for the belt reference plane of the cross-belt trolley. Generally, the reference depth value requires to be pre-fitted and determined. In one embodiment, a method for pre-fitting the belt reference plane is also included, including the following steps.
(1) In a case where the belt region of the cross-belt trolley is in an empty status, a calibrated RGB image and calibrated depth data of the target region are collected through the RGB-D camera.
(2) The belt region of the cross-belt trolley is determined according to the calibrated RGB image.
(3) The coordinate transformation is performed according to the camera parameters for the RGB-D camera as well as the image coordinate and depth values for the each pixel in the belt region of the cross-belt trolley, and the three-dimensional point cloud data of the belt are obtained. After the RGB-D camera is installed, the camera parameters for the RGB-D camera, including the camera intrinsic parameters and the camera extrinsic parameters, can be determined, thus the coordinate conversion relation between the pixel coordinate system and the camera coordinate system can be determined, and then the coordinate conversion can be implemented, and this part is the currently commonly used coordinate conversion method, and this step will not described herein in detail.
(4) A point cloud plane fitting of the belt three-dimensional point cloud data is performed according to a random sampling consistency algorithm to obtain a plane equation of the belt reference plane, and an average depth value for the belt reference plane obtained by fitting is taken as the reference depth value.

In Step 4, the initial mask image in the each detection frame is converted into three-dimensional point cloud data, and a parcel mask region in the RGB image is obtained according to projection data of the three-dimensional point cloud data on a belt reference plane of the cross-belt trolley, and the initial mask image in each detection frame will be operated in this way to obtain the corresponding parcel mask region.
(1) The camera parameters for the RGB-D camera are utilized to perform coordinate transformation based on the image coordinates and depth values for each pixel in the initial mask image to obtain three-dimensional point cloud data.
(2) Then the three-dimensional point cloud data are projected onto the belt reference plane of the cross-belt trolley to obtain projection data. As described in Step 3 above, the plane equation of the belt reference plane of the cross-belt trolley can be pre-fitted, then, based on the plane equation of the belt reference plane of the cross-belt trolley, the three-dimensional point cloud data can be projected onto the belt reference plane of the cross-belt trolley to obtain projection data by utilizing the point-to-plane projection calculation formula.

In the case where the plane equation of the belt reference plane of the cross-belt trolley obtained by fitting is as follows: $A \times X + B \times Y + C \times Z + D = 0 .$

The coordinate **(*x*₀,*y*₀,*z*₀)** of the projection data obtained by projecting an arbitrary 3D point cloud data **(*x*,*y*,*z)*** onto the belt reference plane of the cross-belt trolley is: $\left\{\begin{matrix}{x}_{0} = x - \frac{A \left(Ax+By+Cz+D\right)}{\sqrt{{A}^{2} + {B}^{2} + {C}^{2}}} \\ {y}_{0} = y - \frac{B \left(Ax+By+Cz+D\right)}{\sqrt{{A}^{2} + {B}^{2} + {C}^{2}}} \\ {z}_{0} = z - \frac{C \left(Ax+By+Cz+D\right)}{\sqrt{{A}^{2} + {B}^{2} + {C}^{2}}}\end{matrix}\right.$ where ***A*, *B*, *C*, *D*** denote the coefficients obtained by fitting, respectively, and ***(X, Y*,*Z*)** denotes the point cloud coordinate variable in the camera coordinate system.

(3) The camera parameters for the RGB-D camera are utilized to transform the projection data to obtain the target image coordinates, which transforms the projection data from the camera coordinate system to the pixel coordinate system again, and is similar to the method for transforming the coordinates to obtain the three-dimensional point cloud data, and will not be described in details herein. Then, the pixels at the target image coordinates in the RGB image are extracted to form the parcel mask region, since the extracted and obtained parcel mask region is a precise mask located on the belt reference plane, it is more accurate than the initial mask image.

In Step 5, according to the relative position relation between the parcel mask region and the belt region of the cross belt trolley, as well as the relative position relation between the parcel mask region and accordion plate region of the cross belt trolley, the parcel on the cross-belt trolley is determined to be in a normal single-piece status or an abnormal status.

In the case where the parcel on the cross-belt trolley is in a normal single-piece status, the parcel can be sorted and processed normally. In the case where the parcel on the cross belt trolley is in an abnormal status, the parcel requires to be refluxed. The normal single-piece status of the parcel on the cross-belt trolley refers to that merely one parcel is placed on the cross belt trolley and the parcel is placed in the belt region.

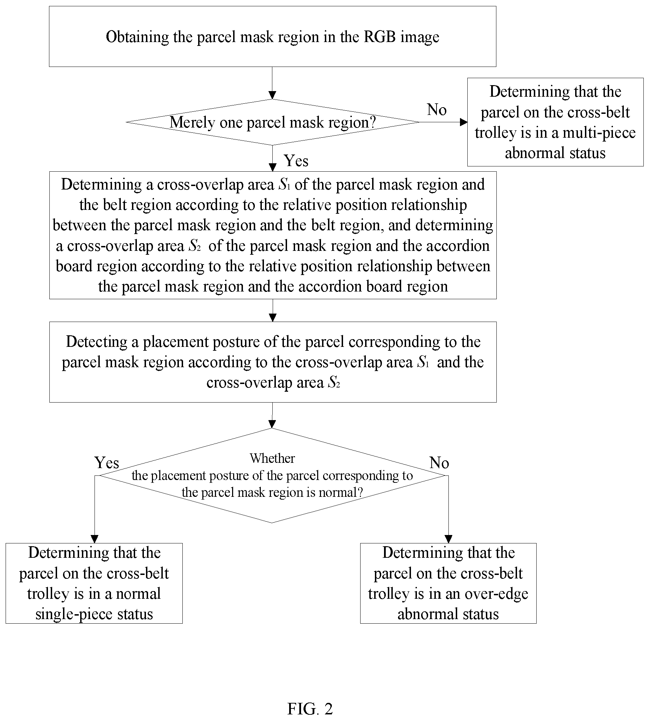

Based on this detection requirement, in reference with the flowchart in FIG. 2. This step determines whether merely one parcel mask region is extracted. In the case where a plurality of parcel mask regions are extracted, the parcel on the cross-belt trolley can be directly determined to be in an abnormal status. In the case where merely one parcel mask region is determined to be extracted, the placement posture of the parcel corresponding to the parcel mask region is further detected according to the relative position relation between the parcel mask region and the belt region of the cross-belt trolley, as well as the relative position relation between the parcel mask region and the accordion plate region of the cross-belt trolley, which includes in the following.
(1) The cross-overlap area ***S*₁** of the parcel mask region and the belt region is determined according to the relative position relation between the parcel mask region and the belt region, and the cross-overlap area ***S*₂** of the parcel mask region and the accordion plate region is determined according to the relative position relation between the parcel mask region and the accordion plate region.
   As mentioned above, since the structure of the cross-belt trolley is fixed, the belt region and the accordion plate region can be pre-calibrated. According to the belt region in combination with the parcel mask region, the pixel area of the region composed of pixels located in both the parcel mask region and the belt region can be determined as the cross-overlap area ***S*₁.** Similarly, according to the accordion plate region in combination with the parcel mask region, the pixel area of the region composed of pixels located in both the parcel mask region and the accordion plate region can be determined as the cross-overlap area***S*₂**.
(2) According to the cross-overlap area ***S*₁** of the parcel mask region and the belt region, and the cross-overlap area ***S*₂** of the parcel mask region and the accordion plate region, the placement posture of the parcel corresponding to the parcel mask region is detected. According to the cross-overlap area ***S*₁,** the overlap size between the parcel represented by the parcel mask region and the belt region can be determined, and the overlap size between the parcel represented by the parcel mask region and the accordion plate region can be determined according to the cross-overlap area ***S*₂**. In the case where the parcel is placed in the belt region, the parcel should completely overlap with the belt region instead of overlapping with the accordion plate region. Considering that in actual implementation, sorting can also be implemented when a small part of the parcel is pressed on the accordion plate region, redundant errors are reserved, based on this: in a case where $\frac{{S}_{1}}{S} > η$ and $\frac{{S}_{2}}{S} ⩽ γ$, the placement posture of the parcel corresponding to the parcel mask region is determined to be normal, otherwise, the placement posture of the parcel corresponding to the parcel mask region is determined to be abnormal. Where ***S*** denotes an area of the parcel mask region, which can be determined by counting the pixel area, and ***η*** and ***γ*** denotes two proportional coefficients respectively, which can be customized as required, and the value for the proportional coefficient ***η*** is generally greater, such as 80% to 90%, and the value for the proportional coefficient ***γ*** is generally less, such as 10% to 20%.

Eventually, it can be determined that in the case where merely one parcel mask region exists and the placement posture of the parcel corresponding to the parcel mask region is normal, the parcel on the cross-belt trolley is determined to be in a normal single-piece status, otherwise, the parcel on the cross-belt trolley is determined to be in an abnormal status.

In actual implementations, all cross-belt trolleys in abnormal status require to perform abnormal reflux, and there are two typical abnormal status: one is the multi-piece abnormal status caused by a plurality of parcels on the surface of the cross-belt trolley, and the other is the super-edge abnormal status caused by the parcels on the surface of the cross-belt trolley being placed in the accordion plate region. Considering that different abnormal reflux operations are commonly required for the two different abnormal status in actual scenarios, these two abnormal status are further distinguished in another embodiment.

In a case where merely one parcel mask region is extracted and the placement posture of the parcel corresponding to the parcel mask region is abnormal, the parcel on the cross-belt trolley is determined to be in an over-edge abnormal status.

In a case where a plurality of parcel mask regions are extracted, the parcel on the cross-belt trolley is determined to be in a multi-piece abnormal status.

In addition, in special situations, in the case where no parcel exists on the surface of the cross-belt trolley, and no the detection frame is extracted and obtained in Step 2, the parcel mask region cannot be extracted and obtained subsequently, thus in the case where no parcel mask region is extracted, it is determined that there is no parcel on the surface of the cross-belt trolley and the cross-belt trolley is in an empty status, and according to actual requirements, the empty status can also be regarded as an abnormal status for reflux processing.

The above are merely preferred implementations of the present invention, and the present invention is not limited to the above embodiments. It can be understood that other improvements and changes directly derived or associated by those skilled in the art without departing from the concept of the present invention should be considered to be included in protection scope of the present invention.

## Claims

1. A method for detecting a parcel status of a cross-belt trolley based on an RGB-D image, wherein the method for detecting the parcel status of the cross-belt trolley comprises:
collecting, by an RGB-D camera, an RGB image and a depth image of a target region, wherein the target region at least includes a belt region and an accordion plate region of the cross-belt trolley;
performing, by utilizing a target detection model, a target detection on parcels in the collected RGB image of the target region, and extracting a plurality of detection frames in the RGB image;
extracting and obtaining, according to depth values for pixels located in each detection frame in the depth image, parcel foreground pixels in the each detection frame, and forming an initial mask image;
converting the initial mask image in the each detection frame into three-dimensional point cloud data, and obtaining, according to projection data of the three-dimensional point cloud data on a belt reference plane of the cross-belt trolley, a parcel mask region in the RGB image;
determining, in a case where merely one parcel mask region is determined to be extracted, a cross-overlap area ***S*₁** of the parcel mask region and the belt region, and a cross-overlap area ***S*₂** of the parcel mask region and the accordion plate region; and
detecting, according to the cross-overlap area ***S*₁** of the parcel mask region and the belt region as well as the cross-overlap area ***S*₂** of the parcel mask region and the accordion plate region, a placement posture of the parcel corresponding to the parcel mask region;
determining, in a case where the placement posture of the parcel corresponding to the parcel mask region is normal, that the parcel on the cross-belt trolley is in a normal single-piece status, otherwise, that the parcel on the cross-belt trolley is in an abnormal status; and
directly determining, in a case where that a plurality of parcel mask regions are determined to be extracted, that a parcel on the cross-belt trolley is in the abnormal status.

2. The method for detecting the parcel status of the cross-belt trolley based on the RGB-D image according to claim 1, wherein the step of detecting the placement posture of the parcel corresponding to the parcel mask region according to the cross-overlap area ***S*₁** and the cross-overlap area ***S*₂** includes:
determining, in a case where $\frac{{S}_{1}}{S} > η$ and $\frac{{S}_{1}}{S} ⩽ γ$, that the placement posture of the parcel corresponding to the parcel mask region is normal, otherwise, that the placement posture of the parcel corresponding to the parcel mask region is abnormal;
where ***S*** denotes an area of the parcel mask region, and ***η*** and ***γ*** denotes two proportional coefficients, respectively.

3. The method for detecting the parcel status of the cross-belt trolley based on the RGB-D image according to claim 1, wherein the method for detecting the parcel status of the cross-belt trolley further includes:
determining, in a case where merely one parcel mask region is extracted and the placement posture of the parcel corresponding to the parcel mask region is abnormal, that the parcel on the cross-belt trolley is in an over-edge abnormal status; and
determining, in a case where a plurality of parcel mask regions are extracted, the parcel on the cross-belt trolley is in a multi-piece abnormal status.

4. The method for detecting the parcel status of the cross-belt trolley based on the RGB-D image according to claim 1, wherein the step of extracting the parcel mask region in the RGB image includes:
performing, according to camera parameters for the RGB-D camera as well as an image coordinate and the depth values for each pixel in the initial mask image, a coordinate transformation, and obtaining the three-dimensional point cloud data;
obtaining, by projecting the three-dimensional point cloud data onto the belt reference plane of the cross-belt trolley, projection data; and
performing, according to the camera parameters for the RGB-D camera, the coordinate transformation on the projection data, and obtaining a target image coordinate, and extracting pixel points located at the target image coordinate in the RGB image, forming the parcel mask region.

5. The method for detecting the parcel status of the cross-belt trolley based on the RGB-D image according to claim 4, wherein the step of obtaining the projection data by projecting the three-dimensional point cloud data onto the belt reference plane of the cross-belt trolley includes:
projecting, according to a plane equation of the belt reference plane of the cross-belt trolley, the three-dimensional point cloud data onto the belt reference plane of the cross-belt trolley by utilizing a point-to-plane projection calculation formula, and obtaining the projection data.

6. The method for detecting the parcel status of the cross-belt trolley based on the RGB-D image according to claim 1, wherein the step of extracting the parcel foreground pixels in the each detection frame according to depth values for the pixels located in the each detection frame in the depth image and forming an initial mask image includes:
calculating, depth differences between the depth values for the each pixel in the detection frame and a reference depth value, wherein the reference depth value is a depth value for the belt reference plane of the cross-belt trolley; and
extracting pixels whose depth difference between the depth values and the reference depth value reaches a depth difference threshold as foreground pixels, and forming the initial mask image within the detection frame.

7. The method for detecting the parcel status of the cross-belt trolley based on the RGB-D image according to claim 5 or 6, wherein the method for detecting the parcel status of the cross-belt trolley further includes:
collecting, in a case where the belt region of the cross-belt trolley is in an empty status, a calibrated RGB image and calibrated depth data of the target region through the RGB-D camera;
determining, according to the calibrated RGB image, the belt region of the cross-belt trolley;
performing, according to the camera parameters for the RGB-D camera as well as the image coordinate and depth values for the each pixel in the belt region of the cross-belt trolley, the coordinate transformation, and obtaining the three-dimensional point cloud data of the belt; and
performing, according to a random sampling consistency algorithm, a point cloud plane fitting on the belt three-dimensional point cloud data, obtaining a plane equation of the belt reference plane, and taking an average depth value for the belt reference plane obtained by the fitting as the reference depth value.

8. The method for detecting the parcel status of the cross-belt trolley based on the RGB-D image according to claim 1, wherein the method for detecting the parcel status of the cross-belt trolley further includes:
pre-training, by using a COCO public dataset, a PP-Picodet network, and obtaining pre-trained weights;
collecting a sample RGB image of the target region and annotating the parcel in the sample RGB image, and performing a data set expansion process on the annotated sample RGB image, and obtaining a sample data set, wherein the data set expansion process includes at least one of a rotation, a brightness transformation and a contrast transformation; and
performing, based on the pre-trained weights obtained by the network pre-training, a network training by utilizing the sample data set, and obtaining the target detection model, wherein a SimOTA sampling strategy and a H-Swish activation function are used during the training.

## Patentansprüche

1. Verfahren zum Erkennen eines Paketstatus eines Quergurtwagens basierend auf einem RGB-D-Bild, wobei das Verfahren zum Erkennen des Paketstatus des Quergurtwagens Folgendes umfasst:
Sammeln eines RGB-Bildes und eines Tiefenbildes eines Zielbereichs durch eine RGB-D-Kamera, wobei der Zielbereich mindestens einen Gurtbereich und einen Ziehharmonikaplattenbereich des Quergurtwagens beinhaltet;
Durchführen, durch Nutzung eines Zielerkennungsmodells, einer Zielerkennung an Paketen in dem gesammelten RGB-Bild des Zielbereichs und Extrahieren einer Vielzahl von Erkennungsrahmen in dem RGB-Bild;
Extrahieren und Erhalten, gemäß Tiefenwerten für Pixel, die sich in jedem Erkennungsrahmen in dem Tiefenbild befinden, von Paketvordergrundpixeln in dem jeweiligen Erkennungsrahmen und Bilden eines anfänglichen Maskenbildes;
Umwandeln des anfänglichen Maskenbildes in dem jeweiligen Erkennungsrahmen in dreidimensionale Punktwolkendaten und Erhalten, gemäß Projektionsdaten der dreidimensionalen Punktwolkendaten auf einer Gurtreferenzebene des Quergurtwagens, eines Paketmaskenbereichs in dem RGB-Bild;
Bestimmen, in einem Fall, in dem bestimmt wird, dass nur ein Paketmaskenbereich zu extrahieren ist, einer Kreuzüberlappungsfläche *S*₁ des Paketmaskenbereichs und des Gurtbereichs und einer Kreuzüberlappungsfläche *S*₂ des Paketmaskenbereichs und des Ziehharmonikaplattenbereichs; und
Erkennen, gemäß der Kreuzüberlappungsfläche *S*₁ des Paketmaskenbereichs und des Gurtbereichs sowie der Kreuzüberlappungsfläche *S*₂ des Paketmaskenbereichs und des Ziehharmonikaplattenbereichs, einer Platzierungshaltung des Pakets entsprechend dem Paketmaskenbereich;
Bestimmen, in einem Fall, in dem die Platzierungshaltung des Pakets entsprechend dem Paketmaskenbereich normal ist, dass sich das Paket auf dem Quergurtwagen in einem normalen Einzelstückstatus befindet, andernfalls, dass sich das Paket auf dem Quergurtwagen in einem anormalen Status befindet; und
direktes Bestimmen, in einem Fall, in dem bestimmt wird, dass eine Vielzahl von Paketmaskenbereichen zu extrahieren ist, dass sich ein Paket auf dem Quergurtwagen in dem anormalen Status befindet.

2. Verfahren zum Erkennen des Paketstatus des Quergurtwagens basierend auf dem RGB-D-Bild nach Anspruch 1, wobei der Schritt des Erkennens der Platzierungshaltung des Pakets entsprechend dem Paketmaskenbereich gemäß der Kreuzüberlappungsfläche *S*₁ und der Kreuzüberlappungsfläche *S*₂ Folgendes beinhaltet:
Bestimmen, in einem Fall, in dem $\frac{{S}_{1}}{S} > η$ und $\frac{{S}_{2}}{S} ⩽ γ$ ist, dass die Platzierungshaltung des Pakets entsprechend dem Paketmaskenbereich normal ist, andernfalls dass die Platzierungshaltung des Pakets entsprechend dem Paketmaskenbereich anormal ist;
wobei *S* einen Bereich des Paketmaskenbereichs bezeichnet und *η* bzw. *γ* zwei proportionale Koeffizienten bezeichnen.

3. Verfahren zum Erkennen des Paketstatus des Quergurtwagens basierend auf dem RGB-D-Bild nach Anspruch 1, wobei das Verfahren zum Erkennen des Paketstatus des Quergurtwagens ferner Folgendes beinhaltet:
Bestimmen, in einem Fall, in dem nur ein Paketmaskenbereich extrahiert wird und die Platzierungshaltung des Pakets entsprechend dem Paketmaskenbereich anormal ist, dass sich das Paket auf dem Quergurtwagen in einem anormalen Kantenüberschreitungsstatus befindet; und
Bestimmen, in einem Fall, in dem eine Vielzahl von Paketmaskenbereichen extrahiert wird, dass sich das Paket auf dem Quergurtwagen in einem mehrteiligen anormalen Status befindet.

4. Verfahren zum Erkennen des Paketstatus des Quergurtwagens basierend auf dem RGB-D-Bild nach Anspruch 1, wobei der Schritt des Extrahierens des Paketmaskenbereichs in dem RGB-Bild Folgendes beinhaltet:
Durchführen, gemäß Kameraparametern für die RGB-D-Kamera sowie einer Bildkoordinate und den Tiefenwerten für jedes Pixel in dem anfänglichen Maskenbild, einer Koordinatentransformation und Erhalten der dreidimensionalen Punktwolkendaten;
Erhalten von Projektionsdaten durch Projizieren der dreidimensionalen Punktwolkendaten auf die Gurtreferenzebene des Quergurtwagens; und
Durchführen, gemäß den Kameraparametern für die RGB-D-Kamera, der Koordinatentransformation an den Projektionsdaten und Erhalten einer Zielbildkoordinate und Extrahieren von Pixelpunkten, die sich an der Zielbildkoordinate in dem RGB-Bild befinden, Bilden des Paketmaskenbereichs.

5. Verfahren zum Erkennen des Paketstatus des Quergurtwagens basierend auf dem RGB-D-Bild nach Anspruch 4, wobei der Schritt des Erhaltens der Projektionsdaten durch Projizieren der dreidimensionalen Punktwolkendaten auf die Gurtreferenzebene des Quergurtwagens Folgendes beinhaltet:
Projizieren, gemäß einer Ebenengleichung der Gurtreferenzebene des Quergurtwagens, der dreidimensionalen Punktwolkendaten auf die Gurtreferenzebene des Quergurtwagens, indem eine Punkt-zu-Ebene-Projektionsberechnungsformel genutzt wird, und Erhalten der Projektionsdaten.

6. Verfahren zum Erkennen des Paketstatus des Quergurtwagens basierend auf dem RGB-D-Bild nach Anspruch 1, wobei der Schritt des Extrahierens der Paketvordergrundpixel in dem jeweiligen Erkennungsrahmen gemäß Tiefenwerten für die Pixel, die sich in dem jeweiligen Erkennungsrahmen in dem Tiefenbild befinden, und des Bildens eines anfänglichen Maskenbildes Folgendes beinhaltet:
Berechnen von Tiefendifferenzen zwischen den Tiefenwerten für das jeweilige Pixel in dem Erkennungsrahmen und einem Referenztiefenwert, wobei der Referenztiefenwert ein Tiefenwert für die Gurtreferenzebene des Quergurtwagens ist; und
Extrahieren von Pixeln, deren Tiefendifferenz zwischen den Tiefenwerten und dem Referenztiefenwert einen Tiefendifferenzschwellenwert erreicht, als Vordergrundpixel und Bilden des anfänglichen Maskenbildes innerhalb des Erfassungsrahmens.

7. Verfahren zum Erkennen des Paketstatus des Quergurtwagens basierend auf dem RGB-D-Bild nach Anspruch 5 oder 6, wobei das Verfahren zum Erkennen des Paketstatus des Quergurtwagens ferner Folgendes beinhaltet:
Sammeln, in einem Fall, in dem sich der Gurtbereich des Quergurtwagens in einem leeren Status befindet, eines kalibrierten RGB-Bildes und kalibrierter Tiefendaten des Zielbereichs durch die RGB-D-Kamera;
Bestimmen, gemäß dem kalibrierten RGB-Bild, des Gurtbereichs des Quergurtwagens;
Durchführen, gemäß den Kameraparametern für die RGB-D-Kamera sowie der Bildkoordinate und den Tiefenwerten für das jeweilige Pixel in dem Gurtbereich des Quergurtwagens, der Koordinatentransformation und Erhalten der dreidimensionalen Punktwolkendaten des Gurtes; und
Durchführen, gemäß einem Zufallsstichprobenkonsistenzalgorithmus, eines Anpassens der Punktwolkenebene an die dreidimensionalen Punktwolkendaten des Gurtes, Erhalten einer Ebenengleichung der Gurtreferenzebene und Übernehmen eines durchschnittlichen Tiefenwerts für die Gurtreferenzebene, der durch das Anpassen erhalten wird, als den Referenztiefenwert.

8. Verfahren zum Erkennen des Paketstatus des Quergurtwagens basierend auf dem RGB-D-Bild nach Anspruch 1, wobei das Verfahren zum Erkennen des Paketstatus des Quergurtwagens ferner Folgendes beinhaltet:
Vortrainieren, durch Verwendung eines öffentlichen COCO-Datensatzes, eines PP-Picodet-Netzwerks und Erhalten von vortrainierten Gewichtungen;
Sammeln eines RGB-Probenbildes des Zielbereichs und Beschriften des Pakets in dem RGB-Probenbild und Durchführen eines Datensatzerweiterungsprozesses an dem beschrifteten RGB-Probenbild und Erhalten eines Probendatensatzes, wobei der Datensatzerweiterungsprozess mindestens eines von einer Drehung, einer Helligkeitstransformation und einer Kontrasttransformation beinhaltet; und
Durchführen, basierend auf den vortrainierten Gewichtungen, die durch das Netzwerkvortraining erhalten werden, eines Netzwerktrainings durch Nutzung des Probendatensatzes und Erhalten des Zielerkennungsmodells, wobei eine SimOTA-Probenahmestrategie und eine H-Swish-Aktivierungsfunktion während des Trainings verwendet werden.

## Revendications

1. Procédé pour détecter l'état de colis d'un chariot de bande croisée basé sur une image RVB-D, dans lequel le procédé pour détecter l'état de colis du chariot de bande croisée comprend :
la collecte, par une caméra RVB-D, d'une image RVB et d'une image de profondeur d'une région cible, dans lequel la région cible comprend au moins une région de bande et une région de plaque d'accordéon du chariot de bande croisée ;
la réalisation, en utilisant un modèle de détection de cible, d'une détection de cible sur des colis dans l'image RVB collectée de la région cible, et l'extraction d'une pluralité de trames de détection dans l'image RVB ;
l'extraction et l'obtention, selon des valeurs de profondeur pour des pixels situés dans chaque trame de détection dans l'image de profondeur, de pixels de premier plan de colis dans chaque trame de détection, et la formation d'une image de masque initiale ;
la conversion de l'image de masque initiale dans chaque trame de détection en données de nuage de points tridimensionnel, et l'obtention, selon des données de projection des données de nuage de points tridimensionnel sur un plan de référence de bande du chariot de bande croisée, d'une région de masque de colis dans l'image RVB ;
la détermination, dans un cas où une seule région de masque de colis est déterminée comme extraite, d'une zone de chevauchement croisé *S*₁ de la région de masque de colis et de la région de bande, et d'une zone de chevauchement croisé *S*₂ de la région de masque de colis et de la région de plaque d'accordéon ; et
la détection, selon la zone de chevauchement croisé *S*₁ de la région de masque de colis et de la région de bande ainsi que la zone de chevauchement croisé *S*₂ de la région de masque de colis et de la région de plaque d'accordéon, d'une posture de placement du colis correspondant à la région de masque de colis ;
la détermination, dans le cas où la posture de placement du colis correspondant à la région du masque de colis est normale, du fait que le colis sur le chariot de bande croisée est dans un état en un morceau normal, sinon, du fait que le colis sur le chariot de bande croisée est dans un état anormal ; et
la détermination directe, dans un cas où une pluralité de régions de masque de colis sont déterminées comme extraites, du fait qu'un colis sur le chariot de bande croisée est dans l'état anormal.

2. Procédé pour détecter l'état de colis du chariot de bande croisée basé sur l'image RVB-D selon la revendication 1, dans lequel l'étape de détection de la posture de placement du colis correspondant à la région de masque de colis selon la zone de chevauchement croisé *S*₁ et la zone de chevauchement croisé *S*₂ comprend :
la détermination, dans le cas où $\frac{{S}_{1}}{S} > η$ et $\frac{{S}_{2}}{S} ⩽ γ$, du fait que la posture de placement du colis correspondant à la région de masque de colis est normale, sinon, du fait que la posture de placement du colis correspondant à la région de masque de colis est anormale ;
où *S* désigne une zone de la région de masque de colis, et *η* et γ désignent deux coefficients proportionnels, respectivement.

3. Procédé pour détecter l'état de colis du chariot de bande croisée basé sur l'image RVB-D selon la revendication 1, dans lequel le procédé pour détecter l'état de colis du chariot de bande croisée comprend en outre :
la détermination, dans le cas où une seule région de masque de colis est extraite et la posture de placement du colis correspondant à la région de masque de colis est anormale, du fait que le colis sur le chariot de bande croisée est dans un état anormal de surbord ; et
la détermination, dans le cas où une pluralité de régions de masque de colis sont extraites, du fait que le colis sur le chariot de bande croisée est dans un état anormal en plusieurs morceaux.

4. Procédé pour détecter l'état de colis du chariot de bande croisée basé sur l'image RVB-D selon la revendication 1, dans lequel l'étape d'extraction de la région de masque de colis dans l'image RVB comprend :
la réalisation, selon des paramètres de caméra pour la caméra RVB-D ainsi qu'une coordonnée d'image et les valeurs de profondeur pour chaque pixel dans l'image de masque initiale, d'une transformation de coordonnée, et l'obtention des données de nuage de points tridimensionnel ;
l'obtention, par projection des données de nuage de points tridimensionnel sur le plan de référence de bande du chariot de bande croisée, de données de projection ; et
la réalisation, selon les paramètres de caméra pour la caméra RVB-D, de la transformation de coordonnée sur les données de projection, et l'obtention d'une coordonnée d'image cible, et l'extraction de points de pixel situés au niveau de la coordonnée d'image cible dans l'image RVB, formant la région de masque de colis.

5. Procédé pour détecter l'état de colis du chariot de bande croisée basé sur l'image RVB-D selon la revendication 4, dans lequel l'étape d'obtention des données de projection en projetant les données de nuage de points tridimensionnel sur le plan de référence de bande du chariot de bande croisée comprend :
la projection, selon une équation de plan du plan de référence de bande du chariot de bande croisée, des données de nuage de points tridimensionnel sur le plan de référence de bande du chariot de bande croisée en utilisant une formule de calcul de projection de point à plan, et l'obtention des données de projection.

6. Procédé pour détecter l'état de colis du chariot de bande croisée basé sur l'image RVB-D selon la revendication 1, dans lequel l'étape d'extraction des pixels de premier plan de colis dans chaque trame de détection selon des valeurs de profondeur pour les pixels situés dans chaque trame de détection dans l'image de profondeur et de formation d'une image de masque initiale comprend :
le calcul de différences de profondeur entre les valeurs de profondeur pour chaque pixel dans la trame de détection et une valeur de profondeur de référence, dans lequel la valeur de profondeur de référence est une valeur de profondeur pour le plan de référence de bande du chariot de bande croisée ; et
l'extraction de pixels dont la différence de profondeur entre les valeurs de profondeur et la valeur de profondeur de référence atteint un seuil de différence de profondeur en tant que pixels de premier plan, et la formation de l'image de masque initiale au sein de la trame de détection.

7. Procédé pour détecter l'état de colis du chariot de bande croisée basé sur l'image RVB-D selon la revendication 5 ou 6, dans lequel le procédé pour détecter l'état de colis du chariot de bande croisée comprend en outre :
la collecte, dans un cas où la région de bande du chariot de bande croisée est dans un état vide, d'une image RVB étalonnée et de données de profondeur étalonnées de la région cible à travers la caméra RVB-D ;
la détermination, selon l'image RVB calibrée, de la région de bande du chariot de bande croisée ; la réalisation, selon les paramètres de caméra pour la caméra RVB-D ainsi que les valeurs de coordonnée d'image et de profondeur pour chaque pixel dans la région de bande du chariot de bande croisée, de la transformation de coordonnée, et l'obtention des données de nuage de points tridimensionnel de la bande ; et
la réalisation, selon un algorithme de cohérence d'échantillonnage aléatoire, d'une adaptation de plan de nuage de points sur les données de nuage de points tridimensionnel de bande, l'obtention d'une équation de plan du plan de référence de bande, et la prise d'une valeur de profondeur moyenne pour le plan de référence de bande obtenue par l'ajustement en tant que valeur de profondeur de référence.

8. Procédé pour détecter l'état de colis du chariot de bande croisée basé sur l'image RVB-D selon la revendication 1, dans lequel le procédé pour détecter l'état de colis du chariot de bande croisée comprend en outre :
le pré-entraînement, en utilisant un ensemble de données publiques COCO, d'un réseau PP-Picodet, et l'obtention de poids pré-entraînés ;
la collecte d'un échantillon d'image RVB de la région cible et l'annotation du colis dans l'échantillon d'image RVB, et la réalisation d'un processus d'expansion d'ensemble de données sur l'échantillon d'image RVB annoté, et l'obtention d'un ensemble de données d'échantillon, dans lequel le processus d'expansion d'ensemble de données comprend au moins l'une d'une rotation, d'une transformation de luminosité et d'une transformation de contraste ; et
la réalisation, sur la base des poids pré-entraînés obtenus par le pré-entraînement de réseau, d'un entraînement de réseau en utilisant l'ensemble de données d'échantillon, et l'obtention du modèle de détection de cible, dans lequel une stratégie d'échantillonnage SimOTA et une fonction d'activation H-Swish sont utilisées pendant l'entraînement.
